# EUROPÄISCHE PATENTANMELDUNG

(11) **EP 1 797 938 A1**
(43) Veröffentlichungstag der Anmeldung: **20.06.2007**
(21) Anmeldenummer: 06022786.5
(22) Anmeldetag: 02.11.2006
(51) Int. Cl.: B01D 46/02

(54) **Schlauchfilter sowie Halteteile hierfür**

(30) Priorität: 14.12.2005 DE 102005059678
(71) Anmelder: Bilfinger Berger Industrial Services AG, 80992 München (DE)
(72) Erfinder: Farnung, Klaus-Dieter, 61267 Neu-Anspach (DE); Menz, Gottfried, 61476 Kronberg (DE); Pitz, Thomas, 65933 Frankfurt (DE); Schwerdtfeger, Frank, 65205 Wiesbaden (DE); Wagner, Klaus, 65719 Hofheim (DE); Dominguez, Rafael Vegas, 65931 Frankfurt (DE)
(74) Vertreter: Hofmann, Matthias

(57) **Zusammenfassung**

Ein Schlauchfilter (1) hat ein erstes Halteteil (4) zur Festlegung an einer Kopfplatte und ein zweites Halteteil (19), welches gegen eine Verlagerung relativ zum ersten Halteteil (4) von der Kopfplatte weg gesichert ist. Eines der Halteteile (19) hat einen radial überstehenden Sicherungsstift (24). Das andere Halteteil (4) hat eine Führungskulisse (14) zur Aufnahme des Sicherungsstiftes (24) und zur Vorgabe einer Relativposition der beiden Halteteile (4, 19) zueinander. Der Schlauchfilter (1) hat zudem ein Filterelement (25) mit einem Filterschlauch (26) und einem stützendem Filterkorb (29). Ein über den sonstigen äußeren Querschnitt des Filterelements (25) überstehender Bund (35) wird in der vorgegebenen Relativposition der beiden Halteteile (4, 19) zwischen diesen definiert festgeklemmt. Ein Verriegelungskörper (9) verriegelt den Sicherungsstift (24) in der vorgegebenen Relativposition in der Führungskulisse (14) gegen ein Auseinanderschieben der Halteteile (4, 19). Das zweite Halteteil ist damit in jeder Situation verlässlich gegen ein Abfallen vom ersten Halteteil gesichert.

## Beschreibung

Die Erfindung betrifft einen Schlauchfilter nach dem Oberbegriff des Anspruchs 1. Ferner betrifft die Erfindung Halteteile für einen derartigen Schlauchfilter.

Ein derartiger Schlauchfilter ist durch offenkundige Vorbenutzung bekannt. Dort erfolgt eine Sicherung des zweiten Halteteils gegen eine Verlagerung relativ zum ersten Halteteil von der Kopfplatte weg durch eine Umfangswulst am zweiten Halteteil, die in eine Umfangsnut am ersten Halteteil eingreift. Durch diese Sicherung ist die Gefahr eines unerwünschten Abfallens des zweiten Halteteils nicht vollständig gebannt.

Es ist daher eine Aufgabe der vorliegenden Erfindung, einen Schlauchfilter der eingangs genannten Art derart weiterzubilden, dass das zweite Halteteil in jeder Situation verlässlich gegen ein Abfallen vom ersten Halteteil gesichert ist.

Diese Aufgabe ist erfindungsgemäß gelöst durch einen Schlauchfilter mit den im Kennzeichnungsteil des Anspruchs 1 angegebenen Merkmalen.

Erfindungsgemäß wurde erkannt, dass das Abfallen des zweiten Halteteils wirkungsvoll unterbunden wird, wenn zusätzlich ein Verriegelungskörper vorgesehen wird. Nach dem Lösen der Verriegelung ist eine einfache Demontage des Filterelements von unten her möglich. Eine derartige Demontage nach unten kann vorteilhaft sein, wenn eine Verschmutzung eines jenseits der Kopfplatte gelegenen Reingasraums vermieden werden soll oder wenn aufgrund der Apparatekonstruktion eine Demontage nach oben nicht möglich oder zweckdienlich ist. Aufgrund der automatischen Ausrichtung der Halteteile zueinander durch das Einschieben des einen Halteteils in die mindestens eine Führungskulisse des anderen entfällt ein zusätzlicher Ausrichtschritt.

Eine Mehrzahl von Verriegelungsausnehmungen nach Anspruch 2 ermöglicht eine gezielte Verriegelung der Halteteile zueinander in einer vorgegebenen Relativposition von mehreren möglichen Relativpositionen.

Eine Sperrklinke nach Anspruch 3 ist sicher und kann unaufwendig ausgeführt sein.

Mit einer Führungskulisse nach Anspruch 4 lässt sich die Einschubtiefe des einen Halteteils in das andere, je nachdem, wo der Sicherungsstift im abgewinkelten Sackabschnitt liegt, fein vorgeben.

Eine Mehrzahl von Führungskulissen nach Anspruch 5 verringert die Gefahr eines Verkantens der Halteteile zueinander beim Einschieben und verringert die Anforderungen, die zum Halten der Halteteile an die jeweilige Führungskulisse und das dieser zugeordnete Führungselement gestellt werden.

Bei Einsatz einer Gummidichtung nach Anspruch 6 entfällt eine separate Erdung des Filterkorbs.

Sollte ein Führungselement, welches in der mindestens einen Führungskulisse geführt werden soll, beschädigt werden, gewährleistet eine Ausgestaltung nach Anspruch 7 einen einfachen Austausch eines solchen Führungselementes, durch Austauschen des zweiten Halteteils.

Eine weitere Aufgabe der Erfindung ist es, Halteteile für einen Schlauchfilter vorzugeben, bei denen in jeder Situation ein Abfallen des zweiten Halteteils vom ersten Halteteil verhindert ist.

Diese Aufgabe ist erfindungsgemäß gelöst durch Halteteile nach Anspruch 8.

Die Vorteile dieser Halteteile entsprechen denjenigen, die vorstehend schon erläutert wurden.

Ein Ausführungsbeispiel der Erfindung wird nachfolgend anhand der Zeichnung näher erläutert. In dieser zeigen:
- Fig. 1: eine Seitenansicht, teils im Axialschnitt und teils innere Details freigebend, eines an eine Kopfplatte zu montierenden Schlauchfilters;
- Fig. 2: eine zu Fig. 1 ähnliche Darstellung eines ersten, an der Kopfplatte festlegbaren Halteteils des Schlauchfilters;
- Fig. 3: eine Ansicht gemäß Sichtlinie III in Fig. 2;
- Fig. 4: eine zu Fig. 1 ähnliche Ansicht eines zweiten, in das erste Halteteil zur Fixierung eines Filterelements des Schlauchfilters einschiebbaren Halteteils;
- Fig. 5: einen Schnitt gemäß Linie V-V in Fig. 4;
- Fig. 6: einen Axialschnitt durch einen Filterschlauch des Filterelements;
- Fig. 7: einen Axialschnitt durch einen Filterkorb des Filterelements; und
- Fig. 8: eine Ansicht gemäß Sichtlinie VIII in Fig. 7.

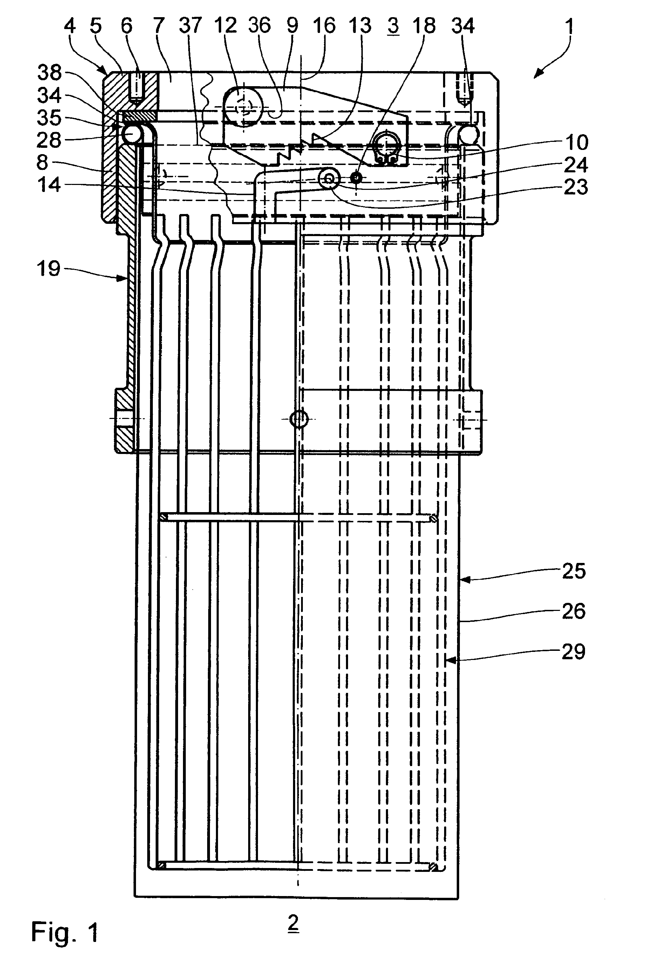

Ein insgesamt mit 1 bezeichneter Schlauchfilter dient zur Reinigung eines Fördergases bei der Abscheidung von Pulvern oder Stäuben. Das Fördergas tritt dabei in Fig. 1 von unten über eine Rohgasseite 2 in den Schlauchfilter 1 ein und nach oben gereinigt hin zu einer Reingasseite 3 in Fig. 1 oberhalb des Schlauchfilters 1 aus. Sämtliche Hauptkomponenten des Schlauchfilters 1 haben eine zylindrische Außenkontur. Der Schlauchfilter 1 ist insgesamt rohrförmig.

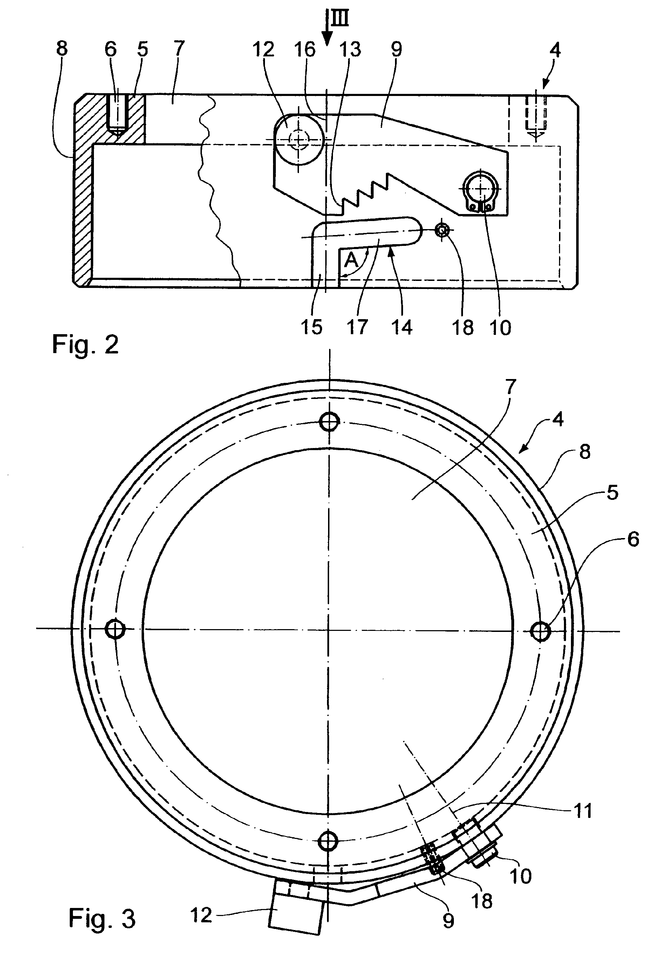

Der Schlauchfilter 1 hat ein erstes Halteteil 4, welches nachfolgend als Mutterteil bezeichnet wird und in den Fig. 2 und 3 dargestellt ist. Das Mutterteil 4 ist an einer in der Zeichnung nicht dargestellten rahmenfesten Kopfplatte festlegbar, die in Fig. 1 oberhalb des Mutterteils 4 angeordnet ist. Zu dieser Festlegung weist das Mutterteil 4 an einem oberen Umfangsbund 5 Sackgewinde 6 zum Einschrauben von durch die Kopfplatte geführten, nicht dargestellten Befestigungsschrauben auf. Der Umfangsbund 5 begrenzt nach innen eine Austrittsöffnung 7 des Schlauchfilters 1.

An einer äußeren Mantelwand 8 des Mutterteils 4 ist ein Verriegelungskörper 9 angebracht, dessen Funktion nachstehend noch erläutert wird. Der Verriegelungskörper 9 ist an einem mutterteilfesten, radialen, äußeren Schwenkbolzen 10 angelenkt und zum Mutterteil 4 um eine radiale Schwenkachse 11 verschwenkbar. An seinem freien Ende ist in den Verriegelungskörper 9 eine Schraube mit Kopf 12 als Schwenk-Betätigungselement eingeschraubt. An seiner in den Fig. 1 und 2 unteren Seite weist der Verriegelungskörper 9 eine Mehrzahl, insgesamt vier, sägezahnförmiger Verriegelungsklinken 13 auf. Die Verriegelungsklinken 13 stellen Verriegelungsausnehmungen dar.

In der in den Fig. 1 und 2 dargestellten Schwenkstellung des Verriegelungskörpers 9 ist unterhalb der Verriegelungsklinken 13 in der Mantelwand 8 des Mutterteils 4 eine Führungskulisse 14 ausgeführt, deren Funktion noch erläutert wird. Die Führungskulisse 14 ist L-fömig. Ein erster Führungsabschnitt 15 der Führungskulisse 14 verläuft längs einer zentralen Symmetrieachse 16 der hohlzylindrischen Mantelwand 8. Ein zweiter Führungsabschnitt 17 der Führungskulisse 14 ist als Sackabschnitt ausgeführt. Der zweite Führungsabschnitt 17 ist gegenüber dem ersten Führungsabschnitt 15 um einen Winkel A (vgl. Fig. 2) abgewinkelt, der geringfügig größer ist als 90°. In der in den Fig. 1 und 2 dargestellten Schwenkstellung des Verriegelungskörpers 9 ist der zweite Führungsabschnitt 17 unter den Verriegelungsklinken 13 angeordnet.

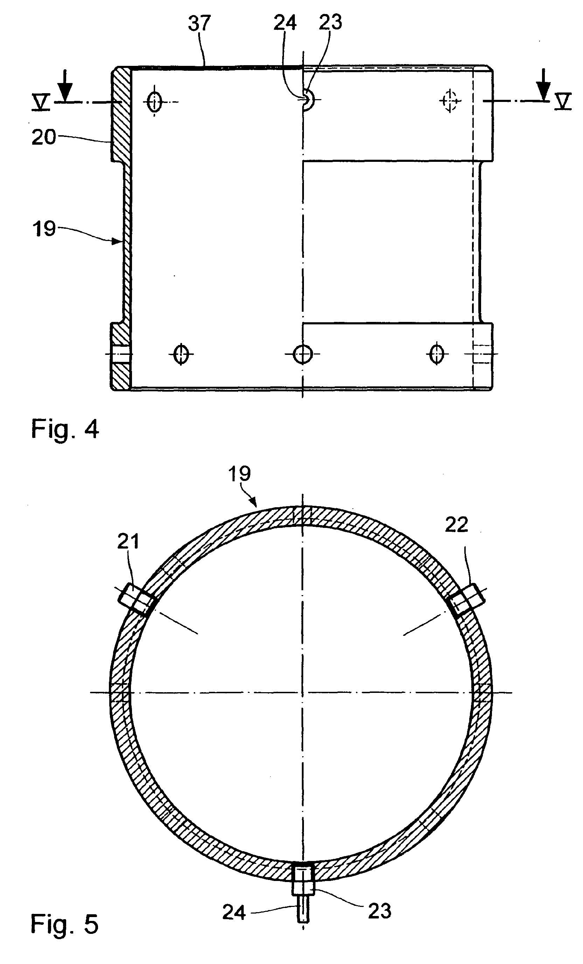

In der Verlängerung des zweiten Führungsabschnitts 17 ist fest in der Mantelwand 8 ein radial nach außen überstehender Begrenzungsstift 18 angeordnet, dessen Funktion noch erläutert wird. Ein zweites Halteteil 19, welches nachfolgend auch als Vaterteil bezeichnet wird, ist in Fig. 1 von unten her in das Mutterteil 4 eingeschoben. Das Vaterteil 19 ist in den Fig. 4 und 5 dargestellt.

Neben der Führungskulisse 14, die in den Fig. 1 und 2 dargestellt ist, hat das Mutterteil 4 noch zwei weitere Führungskulissen, die nicht dargestellt sind und in Umfangsrichtung des Mutterteils 4 gleichverteilt in der Mantelwand 8 ausgeführt sind. Die weiteren Führungskulissen sind genauso mit zwei Führungsabschnitten ausgebildet wie die Führungskulisse 14.

Das Vaterteil 19 ist am Mutterteil 4 an der von der Kopfplatte abgewandten Seite angeordnet und gegen eine Verlagerung relativ zum Mutterteil 4 von der Kopfplatte weg gesichert. Das Vaterteil 19 ist insgesamt hohlzylindrisch ausgeführt und gibt einen Durchgang für das gereinigte Gas vor. In das Mutterteil 4 eingeschoben wird ein in den Fig. 1 und 4 oberer, verstärkter Umfangsabschnitt 20 des Vaterteils 19. Letzterer trägt in Umfangsrichtung gleichverteilt drei radial nach außen überstehende Führungsbolzen 21 bis 23. Der in Fig. 5 unten dargestellte Führungsbolzen 23 trägt einen Sicherungsstift 24. Der Außendurchmesser der Führungsbolzen 21 bis 23 ist etwas geringer als die Weite der Führungskulisse 14 und der weiteren Führungskulissen, so dass die Führungsbolzen 21 bis 23 in diesen Führungskulissen praktisch spielfrei gleiten können.

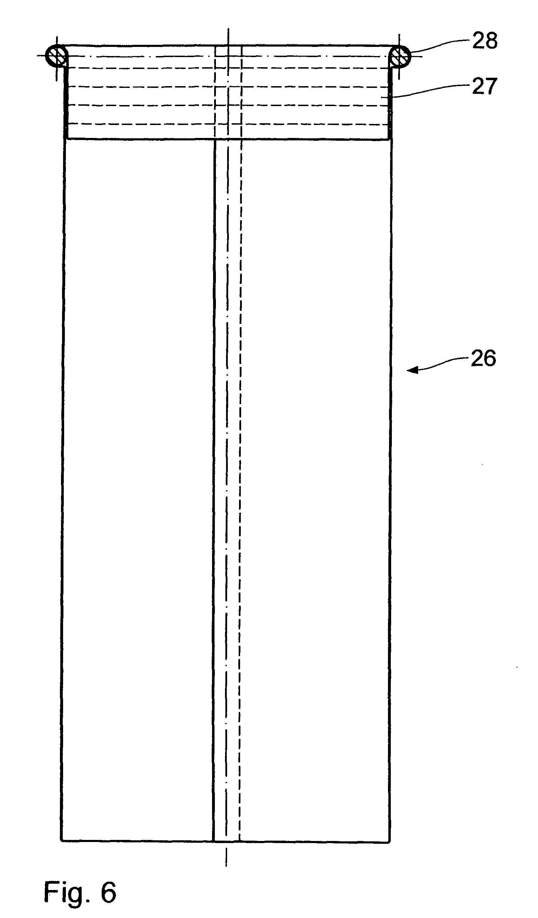

Der Schlauchfilter 1 umfasst ferner ein Filterelement 25. Dieses hat einen Filterschlauch 26, der in Fig. 6 dargestellt ist. Bei dem Filterschlauch 26 handelt es sich um ein Standard-Bauelement. Als Filterfläche dient insbesondere die Umfangswand des Filterschlauchs 26. Im oberen, den beiden Halteteilen 4, 19 zugewandten Abschnitt ist ein Filtertuch 27 des Filterschlauchs 26 nach innen um einen Stahlring 28 herum umgeschlagen. Der Stahlring 28 bildet mit samt dem um ihn herum geschlagenen Filtertuch 27 einen in den Fig. 1 und 6 oberen, nach außen überstehenden Umfangsbund des Filterschlauchs 26.

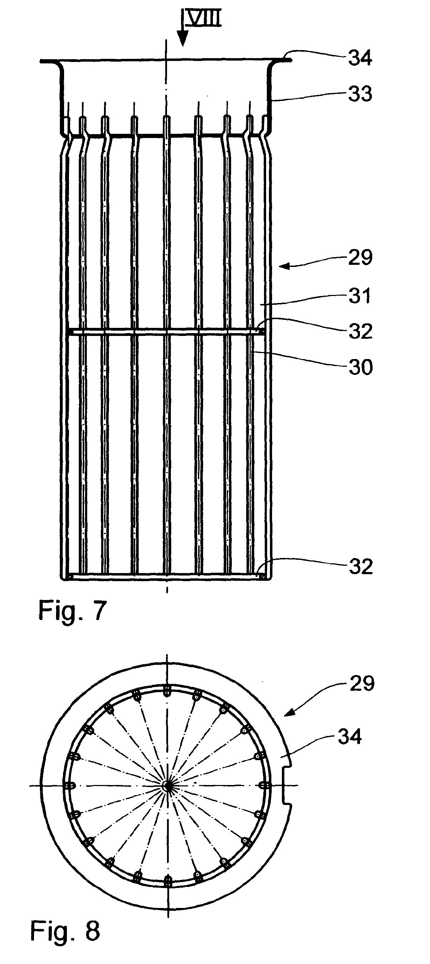

Zum Filterelement 25 gehört weiterhin ein Filterkorb 29, welcher den Filterschlauch 26 innen abstützt. Der Filterkorb 29 ist in den Fig. 7 und 8 dargestellt. Der Filterkorb 29 ist ein Standardbauelement. Er weist eine Mehrzahl axial verlaufender Stege 30 auf, zwischen denen Zwischenräume 31 liegen. In Fig. 7 unten und in der Mitte der Stege 30 dienen zwei innere Stabilisierungsringe 32 zur Versteifung des Filterkorbs 29. Die Stege 30 sind an ihren in den Fig. 1 und 7 oberen Enden an einer Verbindungshülse 33 des Filterkorbs 29 festgelegt. Letztere ist in der montierten Stellung des Schlauchfilters 1 den Halteteilen 4, 19 zugeordnet. In Fig. 7 oben hat die Verbindungshülse 33 einen umlaufenden und nach außen überstehenden Umfangsbund 34.

Der Stahlring 28 und der Umfangsbund 34 bilden gemeinsam einen über den sonstigen äußeren Querschnitt des Filterelements 25 überstehenden Bund 35. Letzterer ist zwischen benachbarte Stirnwände 36, 37 des Umfangsbunds 5 des Mutterteils 4 einerseits und des Umfangsabschnitts 20 des Vaterteils 19 andererseits geklemmt. Dabei ist zusätzlich ein elektrisch leitfähiger Gummidichtring 38 zwischen dem Umfangsbund 34 des Filterkorbs 29 und der Stirnwand 36 des Mutterteils 4 geklemmt. Der Gummidichtring 38 dichtet das Filterelement 25 gegen das Mutterteil 4 ab. Aufgrund der elektrischen Leitfähigkeit des Gummidichtrings 38 ist hierüber zudem eine elektrostatische Aufladung des Filterkorbes 29 ausgeschlossen, da Ladung über den Umfangsbund 34, den Gummidichtring 38, das Mutterteil 4 und die Kopfplatte an einen Rahmen abgeleitet werden kann.

Der Schlauchfilter 1 wird folgendermaßen montiert: Zunächst wird der Filterkorb 29 in den Filterschlauch 26 eingeschoben, bis der Umfangsbund 34 über das Filtertuch 27 am Stahlring 28 anliegt. Anschließend wird das Vaterteil 19 in Fig. 1 von unten her über das Filterelement 25 aufgeschoben, bis die Stirnwand 37 über das Filtertuch 27 am Stahlring 28 anliegt. Auf den Umfangsbund 34 wird nun der Gummidichtring 38 geklebt. Das Vaterteil 19 wird dann in Fig. 1 von unten her in das an der Kopfplatte vormontierte Mutterteil 4 eingeschoben. Beim vormontierten Mutterteil 4 liegt die Unterseite des Verriegelungskörpers 9 auf dem Begrenzungsstift 18 zur Vorgabe einer Ruhe-Schwenkstellung des Verriegelungskörpers 9 auf.

Beim Einschieben des Vaterteils 19 in das Mutterteil 4 wird das Vaterteil 19 in Umfangsrichtung so orientiert, dass die drei Führungsbolzen 21 bis 23 mit den ersten Führungsabschnitten der Führungskulisse 14 und der weiteren Führungskulissen in Eingriff kommen. Der Führungsbolzen 23 mit dem Sicherungsstift 24 ist dabei der Führungskulisse 14 mit dem Verriegelungskörper 9 zugeordnet. Eingeschoben wird das Vaterteil 19 in das Mutterteil 4 also zunächst längs einer Schiebeachse, die mit der Symmetrieachse 16 zusammenfällt. Nach Einschieben des Vaterteils 19 längs des ersten Führungsabschnittes 15 der Führungskulisse 14 wird das Vaterteil 19 gegenüber dem Mutterteil 4 um die Symmetrieachse 16 verdreht, so dass die Führungsbolzen 21 bis 23 längs der zweiten Führungsabschnitte 17 der Führungskulisse 14 und der weiteren Führungskulissen verschoben werden. Bei diesem Verschieben wird das Vaterteil 19 so in das Mutterteil 4 weiter eingeschoben, dass der Gummidichtring 38 zum sauberen Abdichten des Filterelements 25 gegen das Mutterteil 4 komprimiert wird. Sobald das Vaterteil 19 mit einem bestimmten Drehmoment verdreht wurde, ist diese Komprimierung ausreichend. Bohrungen für Hakenschlüssel im Vaterteil 19 sorgen für eine formschlüssige Kraftübertragung beim Drehen des Vaterteils 19. Es wird dann der Verriegelungskörper 9 aus der in Fig. 1 dargestellten Position um die Schwenkachse 11 nach unten verschwenkt, bis eine der Verriegelungsklinken 13 mit dem Sicherungsstift 24 des Führungsbolzens 23 in Eingriff kommt. In Fig. 1 ist eine Situation dargestellt, bei der eine vorgegebene Komprimierung des Gummidichtrings 38 bei vollständigem Einschieben des Führungsbolzens 23 in den zweiten Führungsabschnitt 17 der Führungskulisse 14 erreicht wurde. In diesem Falle wirkt die in Fig. 1 am weitesten rechts dargestellte Verriegelungsklinke 13 mit dem Sicherungsstift 24 zusammen. In anderen, nicht dargestellten Fällen kann auch eine der weiter links angeordneten Verriegelungsklinken 13 mit dem Sicherungsstift 24 zum Verriegeln des Vaterteils 19 am Mutterteil 4 zusammenwirken.

Die Führungskulisse 14 dient also einerseits zur Aufnahme des Führungsbolzens 23 mit dem Sicherungsstift 24 und andererseits zur Vorgabe einer Relativposition der beiden Halteteile 4, 19 zueinander in der ineinander geschobenen Stellung. In dieser Stellung klemmen die beiden Halteteile 4, 19 den Bund des Filterelements 25 definiert fest. Die jeweilige Verriegelungsklinke 13 des Verriegelungskörpers 9 verriegelt den Sicherungsstift 24 in der so vorgegebenen Relativposition in der Führungskulisse 14 gegen ein Auseinanderschieben der Halteteile. Der Verriegelungskörper 9 wirkt also als Sperrklinke. Durch diese Verriegelung ist ein Abfallen des Vaterteils 19 aus dem Mutterteil 4 effektiv verhindert.

Zum Reinigen des Filterelements 25 wird letzteres von der Reingasseite 3 her stoßweise mit Druck beaufschlagt.

Nach dem Lösen der Verriegelung durch Anheben des Verriegelungskörpers 9 kann das Filterelement 25 von unten her einfach demontiert werden.

## Patentansprüche

1. Schlauchfilter (1)
- mit einem ersten Halteteil (4), welches an einer rahmenfesten Kopfplatte festlegbar ist,
- mit einem zweiten Halteteil (19), welches am ersten Halteteil (4) an der von der Kopfplatte abgewandten Seite angeordnet und gegen eine Verlagerung relativ zum ersten Halteteil (4) von der Kopfplatte weg gesichert ist,
- wobei die beiden Halteteile (4, 19) rohrförmig und abschnittsweise ineinander geschoben sind,
- mit einem Filterelement (25), welches umfasst
- - einen Filterschlauch (26),
- - einen Filterkorb (29), welcher den Filterschlauch (26) stützt,
- wobei das Filterelement (25) einen über seinen sonstigen äußeren Querschnitt überstehenden Bund (35) aufweist, der zwischen benachbarten Stirnwänden (36, 37) der ineinander geschobenen Halteteile (4, 19) geklemmt ist,
**dadurch gekennzeichnet, dass**
- eines der Halteteile (19) einen radial überstehenden Sicherungsstift (24),
- das andere Halteteil (4) eine Führungskulisse (14) zur Aufnahme des Sicherungsstiftes (24) und zur Vorgabe einer Relativposition der beiden Halteteile (4, 19) zueinander in der ineinander geschobene Stellung aufweist, in der die beiden Halteteile (4, 19) den Bund (35) des Filterelements (25) definiert festklemmen,
- wobei ein Verriegelungskörper (9) vorgesehen ist, welcher den Sicherungsstift (24) in der vorgegebenen Relativposition in der Führungskulisse (14) gegen ein Auseinanderschieben der Halteteile (4, 19) verriegelt.

2. Schlauchfilter nach Anspruch 1, **dadurch gekennzeichnet, dass** der Verriegelungskörper (9) eine Mehrzahl von Verriegelungsausnehmungen (13) aufweist, von denen jede mit dem Sicherungsstift (24) in einer anderen Relativposition von diesem in der Führungskulisse (14) verriegelnd zusammenwirkt.

3. Schlauchfilter nach Anspruch 2, **dadurch gekennzeichnet, dass** der Verriegelungskörper (9) als Sperrklinke ausgeführt ist, die schwenkbar an einem der Halteteile (4) angebracht ist.

4. Schlauchfilter nach einem der Ansprüche 1 bis 3, **dadurch gekennzeichnet, dass** die Führungskulisse (14) L-förmig ist mit einem ersten Abschnitt (15) längs einer Schiebeachse (16) beim Ineinanderschieben der Halteteile (4, 19) und mit einem gegenüber dem ersten Abschnitt (15) vorzugsweise um geringfügig mehr als 90° abgewinkelten Sackabschnitt (17), wobei die vorgegebene Relativposition dann vorliegt, wenn der Sicherungsstift (24) im Bereich des abgewinkelten Sackabschnitts (27) angeordnet ist.

5. Schlauchfilter nach einem der Ansprüche 1 bis 4, **gekennzeichnet durch** eine Mehrzahl von Führungskulissen (14), verteilt in Umfangsrichtung des anderen Halteteils (4), wobei vorzugsweise nur einer (14) der Führungskulissen ein Verriegelungskörper (9) zugeordnet ist.

6. Schlauchfilter nach einem der Ansprüche 1 bis 5, **gekennzeichnet durch** eine elektrisch leitfähige Gummidichtung zwischen einer Filterkorbwand (34) des überstehenden Bundes (35) des Filterelements (25) und einer der benachbarten Stirnwände (36) der ineinander geschobenen Halteteile (4, 19), zwischen die der Bund (35) geklemmt ist.

7. Schlauchfilter nach einem der Ansprüche 1 bis 6, **dadurch gekennzeichnet, dass** das erste Halteteil (4) die mindestens eine Führungskulisse (14) und das zweite Halteteil (19) den radial überstehenden Sicherungsstift (24) aufweist.

8. Halteteile (4, 19) für einen Schlauchfilter mit einem Verriegelungskörper (9) nach den Ansprüchen 1 bis 7.
